(19) Europäisches Patentamt
European Patent Office
Office européen des brevets

(11) **EP 2 041 658 B1**

(12) **EUROPEAN PATENT SPECIFICATION**

(45) Date of publication and mention
of the grant of the patent:
**10.08.2016 Bulletin 2016/32**

(51) Int Cl.:
*G06F 9/52* *(2006.01)*          *G06F 9/54* *(2006.01)*
*G06F 9/45* *(2006.01)*          *G06F 9/44* *(2006.01)*
*G06F 11/36* *(2006.01)*

(21) Application number: **07733390.4**

(22) Date of filing: **27.06.2007**

(86) International application number:
**PCT/GB2007/002398**

(87) International publication number:
**WO 2008/003930 (10.01.2008 Gazette 2008/02)**

(54) **TECHNIQUES FOR PROGRAM EXECUTION**

TECHNIKEN ZUR PROGRAMMAUSFÜHRUNG

TECHNIQUES POUR UNE EXÉCUTION DE PROGRAMME

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **04.07.2006 GB 0613275**

(43) Date of publication of application:
**01.04.2009 Bulletin 2009/14**

(73) Proprietor: **ITI Scotland Limited
Glasgow G2 2LB (GB)**

(72) Inventors:
• **RICHARDS, Andrew**
**Edinburgh EH1 3HP (GB)**
• **COOK, Andrew**
**Edinburgh EH1 3HP (GB)**
• **RUSSELL, George**
**Edinburgh EH1 3HP (GB)**

(74) Representative: **O'Connell, David Christopher
Haseltine Lake LLP
Redcliff Quay
120 Redcliff Street
Bristol BS1 6HU (GB)**

(56) References cited:
• **KACSUK P: "Systematic macrostep debugging of message passing parallel programs" FUTURE GENERATIONS COMPUTER SYSTEMS, ELSEVIER SCIENCE PUBLISHERS. AMSTERDAM, NL, vol. 16, no. 6, April 2000 (2000-04), pages 609-624, XP004197220 ISSN: 0167-739X**
• **SKILLICORN D B ET AL: "Models and languages for parallel computation" ACM COMPUTING SURVEYS ACM USA, vol. 30, no. 2, June 1998 (1998-06), pages 123-169, XP002454722 ISSN: 0360-0300**
• **MALONY A D ET AL: "Automatic scalability analysis of parallel programs based on modeling techniques" COMPUTER PERFORMANCE EVALUATION. MODELLING TECHNIQUES AND TOOLS. 7TH INTERNATIONAL CONFERENCE PROCEEDINGS SPRINGER-VERLAG BERLIN, GERMANY, 1994, pages 139-158, XP009090717 ISBN: 3-540-58021-2**
• **DE KERGOMMEAUX J C ET AL: "Execution replay of parallel procedural programs" JOURNAL OF SYSTEMS ARCHITECTURE, ELSEVIER SCIENCE PUBLISHERS BV., AMSTERDAM, NL, vol. 46, no. 10, July 2000 (2000-07), pages 835-849, XP004206179 ISSN: 1383-7621**
• **SANCHEZ-CRESPO DALMAU D: "Core Techniques and Algorithms in Game Programming" 2004, NEW RIDERS PUBLISHING , XP002462792 ISBN: 0-1310-2009-9 Chapter 10, section "Send State Changes Only" at pages 310-312**

- **LEMAY L ET AL: "Teach Yourself Java in 21 Days"
  1996, SAMS PUBLISHING , XP002463120 ISBN:
  1-57521-183-1 pages 157-158**

**Description**

The present invention relates to techniques for handling the execution of a computer software program comprising a plurality of distinct program components. In particular, the present invention relates to the interaction between distinct components of a computer program.

It is known for a computer program to be divided up into a plurality of program components, e.g. program objects or computations, so that several components can be executed in parallel or so that one or more components can be executed in turn. A program component, such as a program object, can be considered to be a discrete item forming part of a computer program comprising data and procedures necessary to operate on that data.

During the execution of a computer program comprising several discrete program components, interaction may take place between the program components. Thus, it becomes possible for multiple users to interact with each other, via one or more program components, by means of input data provided to those components. Indeed, there is frequently a desire for multiple users to share a virtual world and to interact with each other within that virtual world, often in real time. In the field of computer games, for example, it is desirable for two or more users to participate in a virtual game world, either by means of a single machine having multiple user interfaces, or by means of a computer system comprising multiple machines. Thus, interactions take place between distinct program components which may be executing on different machines or on the same machine. Interaction between two program components executing on different machines, within the domain of a computer program, typically occurs via a network (e.g. a local area network (LAN) or the internet) although other communication mediums also exist. Where distinct program components executing on the same machine interact, this communication may be by some non-networked mechanism, e.g. using shared memory, Unix domain sockets or other channels of communication that are not networked channels.

Distributed or parallel execution of a computer program is particularly problematic for a number of reasons. One of the main problems to be dealt with in implementing the execution of multiple components of a computer program is that, given the same user inputs, the execution of the same section of code by two different machines/processors, or at different times, will tend to produce different results. This is because most parallel programming systems give different computation results depending on the timing of the different components of the program completing and interacting. Thus, parallel programming systems are often said to be non-deterministic, meaning that the outcome of executing the program cannot be predicted. Even systems that are based on well-written programs can encounter problems due to the issue of non-determinacy. It is also very hard for even the most experienced computer programmers to write and implement distributed programs.

Non-determinacy within a distributed system gives rise to a divergence between corresponding object states on different machines. Inconsistencies between the execution, and thus the simulation and/or presentation, of corresponding objects on different machines comprised in a distributed system will quickly result in observably divergent behaviour. In some instances this divergence can even lead to different program results being obtained on different computers.

The problem of non-determinacy is a particular issue for distributed systems where any divergence between the outcome of execution of a particular program component on one machine and the outcome of execution of that same program component on another machine (given the same user input(s)), will undermine the outcome of the program and, thereby, the value of the system. For example, in the field of online games, where multiple users are each presented with their own view of a virtual world and interact with each other by means of objects which populate that virtual world, it is vital to the continuity of the game to ensure that no observably divergent behaviour arises between corresponding objects on different machines.

In order to avoid the potential for a divergence in the execution result obtained from the execution of corresponding program components, or objects, by different machines, it is known for distributed program providers to conduct all program execution on a server machine and for details about the outcome of that execution to be communicated to the client(s) where necessary. In this case, the client machine will simply be operable to accept user input and to run applications which serve to present the outcome of execution, in the form of visual and audio output, to the user of the client machine and will not conduct the execution of any part of the program.

However, this method utilises a significant amount of the bandwidth capacity available to the system in communicating details about an execution result between a server and a client. It also suffers from latency issues. In particular, within the technical field of global MMOGs (Massively Multiplayer Online Games), which seek to support hundreds or thousands of players simultaneously over a network, the issues of bandwidth consumption and latency are magnified; indeed, the quantity of information to be transmitted between machines via the network may be prohibitive for some games.

In order to try to prevent incorrect, inconsistent program states caused by simultaneous access and mutation of data, distributed and parallel programming systems are known which rely on a process known as locking. This is a mechanism whereby one part of the program locks a particular data structure while it makes use of it and no other parts of the program can access the structure while it is locked. This is difficult for programmers to do, prone to errors (e.g. Race conditions), limits parallelism and can lead to deadlocks, where the program stops working indefinitely. Another problem frequently encountered arises because of the communication bandwidth and latency of the network being used. A network has relatively slow communication, so if two parts of the program run on different computers but require a lot of communication between them, then the network will be a bottleneck. If all parts of the program are accessing the same memory system, then the memory will be a bottleneck.

Other problems include inconsistent and irregular access to data, and exposure to failures that cannot occur in single threaded, non-distributed programs. Because of the large number of possible error causes, it is difficult to write robust software. Sections of program can be running on any computer within the distributed system and may access data on any computer within the distributed system. This means that different techniques must be used to reference different pieces of data within the program. This can make it difficult for programmers to decide which method to use - something fast that only works on the local computer, or something slow and complex that works on any computer.

Another problem is due to the unpredictable nature of user interaction. Because of the amount of time it takes for a message to get from the user's computer to the server and then out to all other users, there is a delay between a user making a change in the system and it being visible to all other users. This makes such distributed systems very unresponsive to user input. When multiple users are using the internet to interact with a program and each other, then network latency (the time taken for a message to get from one computer to another) causes problems keeping the system running interactively and maintaining consistent program state across the network.

Message Passing Interface (MPI) is one example of a known distributed programming system. This is used a lot in high-performance computing. A problem with this, however, is that it suffers from inconsistent data access, locking, blocking, race conditions and deadlocking. The communication bottlenecks are explicit and visible to the programmer. In addition, it is not deterministic and not designed for interactive use. Another distributed programming system is Communicating Sequential Processes (CSP). This is predominantly used for modelling networking protocols and not often used for developing real software. It suffers from locking, blocking and deadlocking and is not designed for interactive use. Other examples of distributed programming systems include multi-threading, remote procedure calls and distributed functional programming. Multi-threading requires shared memory, so there is a communication bottleneck to the shared memory. This also has very limited scalability. Remote procedure calls are a simple system for the programmer. However, it is not amenable to parallelisation and so is not very scalable.

A known scheme for handling parallelism within programs uses the Simula model of computation. This is based around a co-routine control structure. Simula allows for quasi-parallel programs, which contain objects that appear to the user of the Simula program to execute in parallel. In fact, the objects are executed in sequence, but are able to pause and resume execution and to transfer execution from one object to another to allow cooperative scheduling. The Simula programmer must write the transfers of control explicitly to achieve this quasi-parallel effect. Simula assumes objects are local and can access shared global data. A problem with this is that allowing full co-routines leads to programs that are difficult to understand due to the complexity resulting from the transfers of execution.

Yet another known model is the so-called "actor model" of computation. Each actor responds to events, such as receiving a message, and its execution is therefore event driven. This permits parallelism within actors and between actors. However, a problem is that actors are not guaranteed to be executed in any specific order and messages sent between actors are not guaranteed to arrive in any specific order. Therefore an actor-based program is not necessarily deterministic, as on subsequent execution the order in which messages are received may differ.

Some of the above problems can be overcome using distributed functional programming. This is sometimes used in highly scalable systems, like Erlang (which is a programming language used by Ericsson and others for distributed systems). Using this, it is possible to do distributed functional programming without locking, blocking, race conditions or deadlocking. It can also be deterministic, although it is not normally used for writing interactive programs. As well as Erlang, there are other examples of functional programming languages that allow distributed execution. These include Oz, which is a mixture of a functional programming language and an imperative programming language, distributed versions of ML and Haskell: Alice, GPH and Google's Mapreduce system.

KACSUK P: "Systematic macrostep debugging of message passing parallel programs" FUTURE GENERATIONS COMPUTER SYSTEMS, ELSEVIER SCIENCE PUBLISHERS. AMSTERDAM, NL, vol. 16, no. 6, April 2000 (2000-04), pages 609-624, discloses the concept of the execution tree and meta-breakpoints for systematic debugging methodology of message passing parallel programs.

SKILLICORN D B ET AL: "Models and languages for parallel computation" ACM COMPUTING SURVEYS ACM USA, vol. 30, no. 2, June 1998 (1998-06), pages 123-169, discloses models suitable for realistic portable parallel programming.

MALONY AD ET AL: "Automatic scalability analysis of parallel programs based on modeling techniques" COMPUTER PERFORMANCE EVALUATION. MODELLING TECHNIQUES AND TOOLS. 7TH INTERNATIONAL CONFERENCE PROCEEDINGS SPRINGER-VERLAG BERLIN, GERMANY, 1994, pages 139-158, discloses a Parallelization Description Language (PDL) that is used to describe parallel execution attributes of a generic program workload. Based on a parallelization description, stochastic models like graph models or Petri net models can be automatically generated from a generic model to analyze performance for scaled parallel systems as well as scaled input data.

DE KERGOMMEAUX J C ET AL: "Execution replay of parallel procedural programs" JOURNAL OF SYSTEMS ARCHITECTURE, ELSEVIER SCIENCE PUBUSHERS BV., AMSTERDAM, NL, vol. 46, no. 10, July 2000 (2000-07), pages 835-849, discloses an execution model for the parallel procedural programming paradigm, which combines multithreading and communications.

SANCHEZ-CRESPO DALMAU D: "Core Techniques and Algorithms in Game Programming" 2004, NEW RIDERS PUBLISHING, discloses code design, data structures, design patterns, AI, scripting engines, 3D pipelines, texture mapping, etc in game programming.

There is therefore a need to reduce the potential for a divergence in the result obtained, given the same user inputs, from the execution of a given program component on two different machines/processors, or at different times. In summary, it is desirable to ensure that a computer program executes with a high degree of determinism.

According to a first aspect of the present invention there is provided a distributed computer system comprising a server apparatus having a server execution means and at least one client apparatus having a client execution means, wherein the server execution means and ecah client execution means comprise an execution environment operable such that the execution of a plurality of components of a computer program is carried out in a plurality of frames of execution, wherein a frame of execution comprises a unit of time or work comprising at least one component of the computer program, the plurality of frames of execution being executed sequentially such that all of the plurality of components of a current frame are executed before execution of the next frame begins and any changes of state of a component are visible to the component during its execution but not visible to other components until the next frame begins, wherein the client execution means is operable to execute the components of a computer program to be executed by the server execution environment within a browser of the client apparatus, such that the execution of the program components is duplicated by both the server execution environment and the client execution environment, wherein the server execution environment and the client execution environment are further operable to create messages during execution of a component, sending each message to a target component within the same execution environment, preventing the target components reading the messages in the current frame and enabling the target components to read the messages in the next frame of execution in a predetermined order, wherein the order is determined using a deterministic ordering method.

Preferably, according to embodiments of the present invention, messages can be sent from object to object or between the outside world (e.g. the user, or a C++ program) and an object. Messages allow communication between objects within the system and the outside world. They can be transmitted across a network. They are delivered to a particular frame number and target object. According to embodiments of the present invention which are operable to prevent communication between components in the same frame, if an object sends a message, then the message can only be received in a different, and subsequent, frame. Receipt of messages by an object may preferably be implemented by means of a queue of incoming messages provided for each object at each frame. The queue should preferably be ordered using a deterministic ordering method, so as to maintain network consistency.

A deterministic ordering method involves the entire set of messages received for a given object in a given frame being sorted on the basis of

1) order of sending; and
2) the id of the sender.

Therefore, if an object sends two messages: A and then B, the recipient will receive A and then B in that order. Thus, the order of arrival is the same as the order of sending. If two objects (1) and (2) each send two messages A1 and B1, and A2 and B2 the recipient will receive them in the order A1 B1 and then A2 B2, so that order is preserved locally (in the messages from a single sender) and globally (messages from multiple senders are ordered by the id of the sender). In the case of multiple senders, the act of sending may overlap e.g. objects (1) and (2) may execute concurrently. There is preferably an additional ordering on the id given to a client, to allow user input messages to also be sorted e.g. if two clients send a user input message to the same object, the order is determined by the client id.

The outside world within the context of the present invention is software written in other languages that do not follow the preferred conditions for writing a program to be executed within an execution environment of the proposed invention. The outside world does important work like receiving information from the user, transmitting streams of data over the network, or displaying results back to the user. The outside world should preferably not violate preferred conditions of the system that will be discussed later. The outside world can send messages to objects within a system embodying the present invention, may keep references to objects within the system, create objects in the system, create sets of objects to duplicate or execute speculatively, or read the state of objects within the system. The outside world cannot modify the state of any object within the system, although it can be called via functions. However, in order to ensure such function calls do not introduce the potential for a divergence between the execution of corresponding objects on different machines, they should preferably return exactly the same result on every computer in the system whenever the parameters to the function are the same and the frame number the function is called on is the same. Such function calls should preferably not be able to modify the local state of the calling object.

The division of a computer program into a series of frames, i.e. units of time or work, advantageously enables synchronization so that the state of program components may be consistently defined. According to preferred embodiments of the present invention, objects can only change their visible state within a frame and can only read the values of other objects at the end of the previous frame. Messages are also attached to, or associated with, a given frame of the computer program. Frames could be attached to a clock, so that a new frame is started every $1/50^{th}$ of a second (for example) or, a new frame could start as soon as the last frame is finished or, frames could be executed in a pipeline with individual object execution starting whenever enough input data is available for the execution to complete.

Frames could also be hierarchical, wherein a universal frame clock is broken down into sub-frames. This configuration would advantageously allow a set of objects to operate to a much faster frame counter for a particular algorithm that is distributed across multiple objects. It is envisaged that the coarsest granularity of frame would correspond to network frames, while the finest granularity of preferred frame would correspond to operations on the current processor. According to embodiments of the present invention, the state of an object is only visible at the start or end of a frame and, therefore the state is the same at the start of one frame as it was at the end of the previous frame.

By structuring the execution environment in this way, a programmer writing a program for execution within an execution environment embodying the first aspect of the present invention, can advantageously define objects and their behaviour using imperative programming. Consequently, the system is almost as easy to program as a normal imperative programming language. In addition, because of the frame structure and the fact that, according to embodiments of the first aspect of the present invention, intra-frame communication is prohibited, it is possible to parallelise and reason about the software as if it was a distributed functional programming language.

It will be appreciated that, as a consequence of an execution environment embodying the first aspect of the present invention being operable to prevent intra-frame communication, the state of the system at the start of a frame is a function of only the state of the system at the end of the previous frame and any external messages into the system. The state of the system at a frame start consists of the state of all objects at that frame start and any messages sent from the previous frame. Thus, in respect of a computer program comprising a plurality of objects, it is possible to define a subset of all the objects in the system. The subset may be a proper subset or, in the case where there is one object, a non-trivial subset. The state of the subset of the objects in the system at a particular frame will be a function of the state of those objects at the start of the previous frame, and all messages sent into the subset of the objects from the previous frame.

Formally, if $O_{n,i}$ is the state of object $i$ at the start of frame $n$, and $M_{n,i}$ is the list of messages sent from object $i$ from frame $n$ to frame $n+1$, and $f_{n,i}$ is the function that corresponds to the behaviour of object $i$ in frame $n$, then:

$$(O_{n+1,i}, M_{n+1,i}) = f_{n+1,i}(O_{n,i} M_{n,i})$$

This is a function of frame $n$ that is returning the state of frame $n+1$. As can be seen, the entire state of frame $n+1$ is a function only of frame $n$. This means that there is no interdependency within frame $n$, so all objects in frame $n$ can advantageously be executed in parallel.

Another important advantage of the present invention is its ability to allow for highly parallel execution of program objects. Therefore, as the number of objects in a program increases, execution of the program code can be readily distributed over multiple processors when a single processor is no longer sufficient. Furthermore, because parallelism and a high degree of determinism are implicit features of a program written for execution according to the principles of the first aspect of present invention, no changes need to be made to the program code in order to achieve this. As such, embodiments of the present invention facilitate the implementation of large scale deployment so that, for example, complex computer games involving numerous objects can be executed in a distributed fashion to support a high number of users interacting over a network.

A further advantage of the present invention is apparent when considering the issues faced during the process of testing a program. The process of testing a program such as a computer game may involve an operator manually following the execution of sections of code using specified inputs in order to test whether or not the program functions as desired. However, such testing regimes are not easily applied to large scale distributed or parallel programs, wherein the execution environment is distributed across multiple machines and where execution is not deterministic.

It will therefore be appreciated that programs written for execution within an execution environment of the present invention, and which benefit from having a high degree of determinism when run, can be more readily tested with the advantage that a game developer/provider can be confident that the program will execute "correctly" not only when it is tested, but also once deployed.

Within a distributed deployment scenario comprising a server machine and one or more client machines, the client execution environment, or client "runtime system", may be advantageously implemented by means of a software program natively installed in a user's computer system. However, requiring a user to download and install software onto a client machine often provides a barrier to entry for potential participants of a distributed program. In the case of online games for example, where there is a desire for users to share a virtual world and to interact with each other, within that virtual world, over a network, it is technically and commercially advantageous for a provider to be able to offer games that allow a user to participate without requiring that they firstly download and install software onto their machine.

In this respect, according to an embodiment of the present invention, the client execution environment may be implemented within the client's web browser. It will be appreciated by those skilled in the art that a browser is a software application to enable a user to display and interact with text and images on a network, such as the world wide web or a local area network. Web browsers, current examples of which include Internet Explorer or Netscape Navigator, format HTML information for display on a user's machine. Browsers also tend to directly support the execution of a number of languages, such as JavaScript, as well as plug-in based applications which execute via a plug-in runtime system which is either bundled with the browser or installed later, potentially automatically. It will be appreciated that plug-ins are software modules that extend the functionality of a web browser. For example, a common use of plug-ins is to extend the browser support for specialized content such as animation.

Thus, a client execution environment according to embodiments of the present invention may be implemented by means of a browser plug-in which is downloaded on demand, via the network, and installed within a user's web browser on the fly. Alternatively, or additionally, a client execution environment may be implemented by means of a runtime program that is written in a browser-supported language, such as JavaScript, wherein the runtime program is capable of executing code or script written for execution within an execution environment embodying the present invention.

The implementation of a client execution environment within a web-browser is highly advantageous in that it allows a user to participate in a distributed program, such as an online game, without requiring any additional software to be installed on the user's PC. Brower-embedded runtime systems may also be advantageous as a supplement to natively installed client software, since the runtime plug-in/program may be downloaded to a user's browser at the time of execution. This allows the client computer system to execute code or scripts written according to the latest specification, and which may incorporate new features that would not be executable on an earlier version that may be installed on a user's machine.

Thus, it will be appreciated that a distributed computer system embodying the present invention can advantageously support clients that execute in different types of runtime environment (i.e. implemented within different client platforms), from standalone client applications to browser embedded clients, without requiring modification of the code written for execution within a server execution environment. A great advantage offered by systems embodying the present invention is therefore that code or objects written for execution within the frame structure of the present invention, can be re-used, without modification, in any execution environment embodying the present invention however that execution environment is implemented. This substantially reduces the development effort to implement a distributed program such as an online game, by removing the need to write and maintain game logic for both the client and server platforms. Program developers can therefore focus on the details relating to the program interface, rather than spending a long time ensuring consistency on every platform.

Whilst circumventing the necessity for program code to be written/modified for different system platforms is a significant benefit of programs developed for execution within an execution environment of the present invention, it may be also advantageous in some circumstances for a program provider to be able to provide a first, more basic, client application, as well as a second, more sophisticated, client application, perhaps having better graphical effect, in order to execute more optimally within a particular class of client platform. For example, the first, more basic client application could be executable within a downloadable browser plug-in allowing immediate participation in a distributed program, whilst a more sophisticated version could be available to a participant if they install software for providing a client execution environment onto their machine. Furthermore, the level of sophistication of the code sent by the server for execution on a particular client machine can be modified, e.g. enhanced or simplified, to better match the resources and capabilities of the client. Thus, in this case, the server will have the capability to match the code sent to a client.

A provider/developer of a computer game, for example, intended for distributed execution, may therefore develop a program for that computer game as follows:

1) Write game play code (i.e. game logic) for execution within a generic server execution environment, wherein the game-play code is applicable for execution by a client execution environment implemented within any client-platform;
2) Write a client application (such as a Java applet) to interact with the game-play code when executed on the client, to display graphics on a client machine and receive user input;
3) Optionally, write client applications for a particular additional target platform (e.g. console, mobile phone, PC, web-based client), based on a modification of the game-play code written in step 1. Thus, the client application written for a given target platform may be a more sophisticated version of the game-play code written in step 1, or it may be a simplified version. For example, it is envisaged that more sophisticated client applications could be operable to run unmodified game-play code, whilst client applications having relatively limited capabilities or resources will be operable to run a simplified version of the gameplay code that has been specifically written for that client platform; and

4) Distribute the client application(s) and operate the server system for the clients to connect to.

A number of techniques have been previously proposed, particularly within the field of online gaming, for managing the execution of a program over a network wherein a client is implemented within the browser of a client machine. For example, browser-based games are known which rely entirely on client-side technologies such as a web browser and a plug-in such as Java or flash, to execute the game code within a client web-browser. However, due to the fact that the security model of web browsers generally restricts the ability of code to communicate with third parties, usually only permitting a connection back to the originating server from which the code is obtained, such plug-in based games are typically restricted to single player games.

So-called server-side games are also known wherein all game code is stored and executed on the server side. Games such as this send client-side applications written in a browser-supported language, which allow the user to see immediate responses from their online games. In this case, the client-side code will merely present the interface of the game and will do little more than relay user input to the server and respond to the server so as to update the game shown to the user. The game client does not actually run the game code, but merely accepts input from the user to send to the server and accept updates from the server for display of the game to the user. However, as the client is dumb, such systems suffer from problems relating to network traffic; bandwidth consumption will be high as a result of the communication needed between the client and the server to ensure that the client machine correctly displays the current state of the game world. Latency is also an issue as updates require a client-server-client round trip before they can be displayed.

There is therefore a need to provide a distributed system which improves the bandwidth requirements and responsiveness of previously considered multi-player networked games.

Thus, in order to duplicate the execution of a component of a program on each of a server apparatus and one or more clients, it is necessary for both the server execution environment and the, or each, client execution environment to be structured and operable such that the execution of program code comprising that program component, given the same initial conditions (e.g. initial state of objects comprised in said program portion) and input data (e.g. user input), by each execution environment will give essentially the same result. The execution environment of each participating apparatus will advantageously be deterministic. Preferably, the execution environment of one or more of the participating apparatuses comprises an execution environment according to the first or second aspects of the present invention.

Within the context of a distributed computer game, for example, the 'program component' to be executed on each of the server and client(s) preferably comprises code defining at least part of the 'game logic' - the objects and/or permitted actions within a game world. Thus, game logic code will execute actions on the relevant objects of a program in response to user input and pre-programmed behaviour patterns.

Any client execution environment of the present invention, whether native to the client machine or implemented within the browser of a user's machine, should preferably allow an application to:

- connect/disconnect to/from the server apparatus;
- fetch and execute program computations written for execution in an execution environment of the first aspect of the present invention;
- examine program computations on the client; and
- allow communication between program computations executing locally on the client machine or remotely on another client machine or on the server for example, for sending user input data.

In this respect, the client runtime system allows the execution of code, written for execution within an execution environment of the present invention, that is sent from the server and which interacts with code running on the server and on other clients. In this way, the use of a common language for writing program code, which may be executed within an execution environment embodying the present invention on all of the machines comprised in a distributed computer system, advantageously allows the client and server to be operable to duplicate concurrent computations (i.e. computations belonging to the same frame) deterministically.

To allow a program to be executed within an execution environment of the present invention, it should preferably be suitably structured. To do this, it should be preferably written having regard to the following set of preferred conditions. These preferred conditions restrict what can be written in the language and ensure that program code can be safely distributed across a network. The preferred conditions are as follows:

(1) The program is written in such a way as to be split up into loosely coupled independent computations, each computation having zero or more instances in the execution state at any one time;

(2) Each computation instance has a behaviour (code) and a state (data and execution point);

(3) Execution is divided up into "frames";

(4) For each frame, the system runs through all the computations in the system and executes their code until they get to a "next frame" statement;

(5) Regarding communication between computations, computations may contain references to other computations, may involve reading the state of other computations, may modify their local state, may receive messages from other computations and may send messages to other computations ;

(6) Computations cannot directly modify other computations, but may only send messages to computations and read a computation's state;

(7) If a computation changes its state then the change is immediately visible to itself, but is not visible to other computations until the next frame and

(8) Computations can create other computations. The other computations will exist starting with the next frame. For the sake of clarity, the following text will refer to the computations as objects. However, it will be understood that other forms of computation could equally be used.

Preferably, each frame of each instance of an object comprises object data and an object execution point. At the start and end of every frame, the execution point will therefore be at a *next-frame* statement, except in the case of termination of computation, when the execution point will either be error or quit. The next frame statement is the last instruction to be executed in a frame. Preferably, in use, an execution environment embodying the present invention is operable to execute each frame up to and including the next frame statement. Thus, the object state is modified iteratively whenever the object's code is executed. However, according to preferred embodiments the iterative changes and intermediate states are never visible to any other objects and only the state at the end of a previous frame is visible to other objects.

The preferred conditions imposed on the programmer when the program is written, together with the features of the execution environment, will advantageously enforce a system in which code will always be executed in a consistent, deterministic way across all computers in the network. So, if the same object in the same state executes the same code on two different computers or at two different times, then the new state of the object will be identical. Whilst a high degree of determinism can be achieved according to the features of the present invention alone, it may therefore be necessary for the system to specify precise rules about floating-point operations, store any seed value for random number generators; always initialising values to a defined state; ensuring basic types must be the same size (e.g. integer range must be consistent); ensuring overflow/underflow handling is consistent; and preventing platform specific variation of program semantics.

Programs written as described above can advantageously be split up and run across a network. A program that is written in a language suitable for execution within an execution environment of the present invention will usually be made up of a set of *instances* of *objects.* It may be advantageous for a complete set of object instances to be split into any number of *subsets.* A *subset* of the objects can then be advantageously moved or duplicated onto other computers within the system. Once duplicated the subset of objects can advantageously remain synchronized with respect to corresponding frame numbers in the same state on all of the machines in the network just by duplicating any messages from objects outside the subset to objects inside the subset to all machines that have a copy of the subset. Thus, every object can change state for each frame. The frames can be numbered. So, the synchronization is defined as meaning that an instance of an object is in exactly the same state for any given frame, no matter what machine in the network the object instance is stored on. It is the job of a particularly preferred execution environment to maintain the same state for every duplicated instance of an object in the network. The preferred conditions relating to the language in which a program for execution with an execution environment of the present invention advantageously make it easy for the system to calculate the information that needs to be passed across the network to guarantee that the states remain synchronized, simply by being able to determine if any messages are crossing into the subset from outside the subset.

The execution environment, or a part of the execution environment (for example, embodied within a particular client machine) may advantageously be able to speculatively execute ahead to future frames, even if all the information required to do a correct prediction is not available. The system can take a mixture of real input data and guessed data (and guessed omitted data) to execute ahead of the currently available input information. This is useful to keep the system responding to local user input while input data from across the network is delayed due to latency. A computer can maintain both a real and a speculative system state, so guaranteeing that user input is responded to quickly, but the guessed data does not have any permanent impact on the system. It is therefore always possible to roll back to the real state if the guessed state is determined to be incorrect.

One of the most time-consuming stages of program development is the stage when the program must be "debugged". Debugging refers to the process of identifying, correcting and removing errors or "bugs" from computer programs. A debugger is a piece of software that enables a program to be run in debugging mode rather than normal mode. A debugger is therefore an application used to examine the internal state of an executing application, primarily to identify the root cause of run time program errors. It is often invoked at the point of failure in the executing application or used in a testing scenario to run the executing application until failure occurs. Conventional debuggers offer the following main functions:

(1) Introspection - the debugger allows a user to inspect the state of objects or to see the source code of each statement as that statement executes;
(2) Suspend - the debugger allows the execution of the program to be suspended or paused at any point in the program;
(3) Interaction - the debugger permits a user too issue various commands in order to examine and change the internal state of the program with view to correcting an error.

Debugging programs is a complex and time consuming endeavour. In particular, programs that are non-deterministic suffer from the problem that a successful run of a program on a given input does not guarantee the same, correct execution of the program a second time on the same input. This leads to bugs that are a) hard to find, as they occur only in certain situations; b) hard to reproduce as the circumstances in which they occur must be recreated exactly and c) occur only in some environments e.g. on an end-user's computer but not on a developers computer. Indeed, without deterministic execution a program error cannot necessarily be recreated in the debugger execution environment. Even worse, errors may only become apparent post deployment when the program executes in a different environment form the test environment.

This problem is compounded when attempting to debug a program that has been deployed, or is intended to be deployed, for distributed execution by a plurality of machines, via a network. Even after deployment of a distributed program which has been extensively debugged prior to deployment, there may be a need for providers of a distributed program to fix errors that arise on a particular end-user's computer that were not identified and corrected during the development stage. This is particularly an issue in systems where the outcome of program execution depends to some degree on the particular circumstances of the execution platform.

There is therefore a need to provide a debugging tool which is less dependent on the circumstances and environment in which the program is to be executed.

The primary advantage of debuggers used on apparatus embodying the present invention is that, as a consequence of the frame structure of the environment in which the program is executed during the debugging process, the execution of the program to be debugged within the execution environment of the debugger advantageously exhibits a high degree of determinism. As such, the program is guaranteed to execute in the same manner no matter where that execution takes place. Furthermore, with a record of the input provided to a program in one location, .e.g a user's machine, the execution of that program can advantageously be recreated in another location, e.g. on a developers machine.

Preferably, the debugger comprises an inspection means operable to allow the computer program to be inspected by a user during execution. In particular, the inspection means is preferably operable to allow a state of said component to be inspected by a user during execution. Thus, a user is able to inspect the state of objects within a given frame, and to relate the current point of execution of those objects with the textual representation of the object in the source script. A display means is typically provided in order that the debugger can provide a visualisation of the states of the executing objects or a view of a virtual world.

Preferably, the debugger comprises interaction means which permits the user to interact with the executing program by allowing communication with computations of the computer program. In particular, the interaction means is operable to permit a user to interact with the executing program by allowing communication with one said component of the computer program during execution. Thus, a user can send a message to an object in order, for example, to test and inspect the execution of that object following receipt of the message.

Preferably, the debugger comprises mutation means operable to permit the user to directly alter values within the state of objects in a frame. In particular, the mutation means is operable to permit a user to directly alter values comprising one or more of said components. This is advantageous in that it allows the user to test how the program being debugged will handle different values.

The debugger may also provide simulation execution mean comprising means operable to create a successor frame. According to this embodiment, the execution environment is operable to execute a frame and a successor frame is created, wherein the execution means is subsequently operable to execute the successor frame. This features is particularly advantageous in that it allows the user to execute speculatively ahead of a particular frame, for example to see how the program will continue to execute following a mutation or a correction to a particular frame.

According to a particularly preferred embodiment, the debugger may comprise save means according to which all object states belonging to a particular frame may be saved. In particular, the save means may be operable to generate a saved frame which comprises information about the state(s) of the or each component in a particular frame. A restore means allows the saved frame to be reloaded for subsequent execution. This is beneficial in that it allows a user to test one code path and then return to the saved frame to test another code path. Whilst in some applications it may be advantageous to store a history of the object states at every frame comprised in a particular portion or section of code, as consequence of the deterministic execution of a program within the execution environment of the present invention, which effectively allows execution to be recreated, or replayed, this is not necessary. Specifically, it may be preferable to save frame states periodically (e.g. every 50th or 100th frame) together with a log of the input to the program being tested, so that the history of states can effectively be recreated each time, thereby averting the need to save a history of states.

A debugger embodying of the present invention advantageously comprises an undo means. This feature allows a frame or a set of frames to be discarded in order to return the current execution state to that of an earlier, specified frame. This is beneficial in that a replay means may be provided to then allow a user to re-examine the state of a particular section of code, perhaps by repeating the execution more slowly, in order to identify the cause of an error. The ability to replay execution from a particular state, either following operation of an undo means or once a frame state has been restored by the restore means, arises as a consequence of the deterministic properties of the debugger execution environment which ensures that the program will always execute in the same way given the same initial starting parameters. One frustration for users that are tasked with debugging known, non-deterministic, programs is that an error may become apparent, for example if an executed frame fails to show that a set of conditions are fulfilled or if an assertion is violated by the program being executed, however attempts to re-run the program, even with the same user inputs, can fail to recreate the error since the execution occurs slightly differently. The ability to replay, i.e. exactly replicate, execution within a debugging tool is a significant improvement over known debugging tools which do not benefit from the property of determinism.

From a commercial view-point, the frame based debugger embodying the present invention permits increased productivity in developing and testing distributed parallel program, such as online games. It will advantageously allow for more rapid fixing of errors within a distributed program. Furthermore, a particular advantage of the present invention, in the context of a distributed deployment scenario, is that an end-user who encounters a program error during execution of a distributed program can send the history of their program execution or, more likely, enough data to allow the history to be recreated, as part of a bug report to the developers. It is envisaged that this report may take place automatically. Then the developer may directly replay and recreate the problem in order to see where the error occurs. The developer can also replay the code section to test if an implemented mutation or code change fixes the error.

According to embodiments of the present invention, the process of finding and fixing bugs and testing bug fixes, is advantageously streamlined. This provides considerable savings on developer and tester time, thereby reducing development and support costs. Moreover, the ability to provide such efficient and effective debugging leads to improved customer satisfaction.

In any of the above aspects, the various features may be implemented in hardware, or as software modules running on one or more processors. Features of one aspect may be applied to any of the other aspects.

The invention also provides a computer program or a computer program product for implementing the techniques described herein, and a computer readable storage medium having stored thereon a program for implementing the techniques described herein. A computer program embodying the present invention may be stored on a computer-readable medium, or it could, for example, be in the form of signal such as a downloadable data signal provide from an internet website, or it could be in any other form.

For a better understanding of the present invention, and to show how the same maybe carried into effect, reference will now be made, by way of example, to the accompanying drawings in which:

> Figure 1 is a block diagram of a distributed computer system;
>
> Figure 2 shows an object flow graph;
>
> Figure 3 is diagram of program execution;
>
> Figure 4 is a schematic view of two networked computers, one of which has a plurality of objects stored on it;
>
> Figure 5 is another view of the computers of Figure 4, in which a subset of the objects ('a', 'b', 'c' and 'd') has been copied from the first computer onto the second computer;
>
> Figure 6 is a view of the computers of Figure 5 in which messages ('x', 'y' and 'z') on the first computer are duplicated on the second computer;
>
> Figure 7 shows the addition of another object ('e') to the second computer of Figure 5 and 6;
>
> Figure 8 shows messages being duplicated on the second computer of Figure 7;
>
> Figure 9 shows a distributed computer system embodying the present invention; and
>
> Figure 10 shows parts associated with a computer system having a debugger 21 according to an embodiment of the present invention.

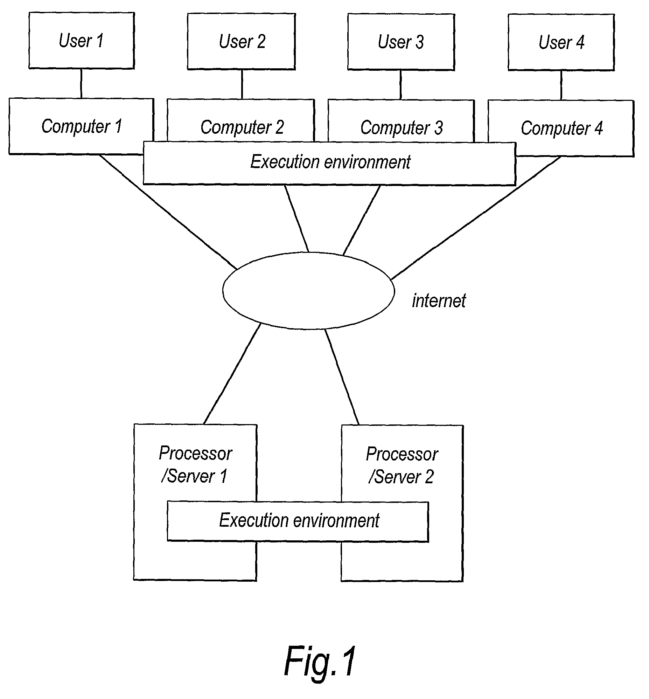

Figure 1 shows a computer system for allowing a plurality of users' computers 1-4 to interact with software that is distributed over a plurality of processors/servers. The system includes, an execution environment, a network transport system, typically the internet, and an interface to external languages and systems (the "Outside World"). Whilst the execution environment is shown extending separately across the users' computers and the processors/servers, it will be appreciated that this is merely a diagrammatic representation and in practice, the execution environment exists across all of these. A compiler (not shown) is required on a development computer for developing the software. The system provides a regular data access model (meaning access to all objects in the systems appears to the programmer to be the same). All data within the system is in the form of objects. A reference to an object can point to an object in any part of the distributed system. The pointer can even refer to an object that is duplicated across multiple machines in the system.

The compiler takes definitions of objects and compiles them into instructions for execution in the execution environment. The execution environment instructions available may include: arithmetic operations on integers and floating-point values (floating-point operations must be consistently defined on all systems); conditional operations on integer and floating-point values and other forms of data; operations to modify the state of the current object, but only visible to other objects in the next frame; creation of new objects of a specified type (only available on the next frame); take a reference to another object and read its state; destroy this object; send a message to another object (only received on the next frame); check for a message received and read its value and call a function defined by the external system (the function must not modify the system state for this frame).

According to one embodiment, the execution environment of the system shown in Figure 1 may be implemented as a virtual machine. The virtual machine maintains a set of frames. Each frame has a number. Within each frame are objects and messages. Messages are attached to two frames. They are sent from one frame and are received in the next. The virtual machine needs to have a system for storing frames, objects and messages. There will be at least one frame stored at a given time- the current consistent frame. During the execution of a frame, then there will be at least two frames in the store - the current and next frame. Objects are read from the current frame, executed and then written to the next frame.

Queues of messages are maintained, such that given a frame and a target object, it is possible to return a list of messages sent to that object. The execution environment is therefore operable to maintain these queues. According to this embodiment, a message sent from frame *n* will arrive in frame *n*+1. Therefore, separate queues should preferably be maintained for each object in each frame. To maintain consistent execution, the messages are sorted using a predefined sorting specification. It does not matter what the sorting specification is, as long as it is consistent throughout the network and results in an ordering of messages such that the determinism of the program is not compromised. Thus, if there are two messages A and B that are completely identical, the relative order of A and B is immaterial. If A and B can be in any way distinguished, the order is then (potentially) significant. Messages will be sent into the system attached to frame numbers. The system therefore stores these messages in the correct place.

The system embodying the present invention provides a system for identifying objects, such that given an object and a frame number, the execution environment can find the object within its store or in another location on the network. If the object is not within the store, but is available somewhere else on the network, the execution environment is operable to send a request for the object state over the network. The execution environment on the other system will be operable to receive the request and to send back the object state over the network.

The system of this embodiment is adapted to destroy frames, objects and messages that are no longer in use. Generally, frames, objects and messages that are older than the consistent execution frame are no longer required. The system is also adapted to maintain sets of objects and to quickly determine which objects are inside the set, and which objects are outside. This is used for speculative execution and networking. This will be described in more detail later.

The Figure 1 system is operable to know when all object states and messages are available for a frame. If messages are being sent from another computer on the network, then there needs to be a system of identifying when all messages have arrived. Consistent execution for a frame does not start until all messages are available. The system also may need to be able to maintain one or more speculative execution frames. This is another frame that is ahead of the consistent execution frame. The speculative execution frame is produced by executing from the consistent execution frame to the speculative execution frame and ignoring any missing objects or messages that are not available. The system should keep all messages used up by this execution in their original frames. When an object destroys itself, all references to that object may be changed to a state that clearly defines a dead reference. This may be done when the objects destroys itself or at the time of use. It is not permitted to destroy objects that have no references to them. Such objects might still be active in the system.

The network transport system is operable to serialize objects and messages to a network packet or packets, depending on size and to perform the reverse procedure of deserialising packets into objects and messages It is also able to receive objects and messages attached to individual frames and put them into the local store. It also implements a system of specifying sets of objects that are to be duplicated on other machines on the network. The sets and the machines that are duplicated across must be stored in a suitable data structure such as a list. It must then be possible to find all messages that cross over the set boundaries and send these to the machines that need them. Messages that come from objects on the local machine into a set of objects that are duplicated onto other machines on the network and must be sent to the relevant machines. Once all messages from the local machine have been sent to objects for the current frame, a message must be sent to other machines to say they have received all messages from this system for this frame. This allows those other machines to stop waiting for messages for the current frame. Messages from the local system into the network programming system are assumed to be sent at the current speculative frame, not the current consistent network frame. *i.e.* messages sent from the user will only be allowed applied to the speculative state and queued until the consistent network state consumes them.

To deal with the situation of a machine on the network losing its connection, a timeout is enforced, so that if a machine has not sent in a complete frame's worth of messages, then it is assumed by other machines that no messages will be sent for that frame from that machine. The machine will have to be sent a message saying that it must also assume that none of its messages for that frame will be allowed into the consistent network state. Sometimes it will be necessary to send the states of object across the network repeatedly for every frame, so that other objects on the target computer can read the states of those objects, without having to execute those objects. This is because there may not be a boundary across which only messages are sent. There may be a continuous sequence of objects that read the state of their neighbours. The neighbouring objects are therefore sent repeatedly over the network, so that their states can be read by objects that are being read by the machines.

The interface to external languages and system isan API to link to an external network protocol, messaging system and function calling interface. The external system can: create new objects of a specified type (they will only be available on the next frame); send messages to objects; control when the next frame starts executing; create sets of objects to be duplicated across a network; speculatively execute up to the current frame; send in messages that have been received for previous frames across the network; signal when another machine has sent a message to say that no further messages will be received for a particular frame number; create function calls that can be called from the system (These must not alter the global state of the system in a way that can have an affect on the distributed system execution, otherwise network consistency will be lost. However, these calls can send information to the user, and read the state of objects. The external system cannot modify the state of objects.

Each object has a main procedure that is called after the object is created. The main procedure, for example, may contain "next frame" statements. An object can modify its own state. However, the modified state cannot be visible to other objects until the next frame starts, so the code will keep a local copy of the object. Only the local copy is modified by the object. This modified local copy is returned by the object at the end of the frame. The execution system will store this returned modified object in adata store provided for the frame, keeping the original object in the data store for the original frame. Therefore, during exaction of frame *n*, it is necessary to store frame *n-1* and store the results of execution of each object into *n*. Frame *n* will not be read until frame *n+1* starts executing.

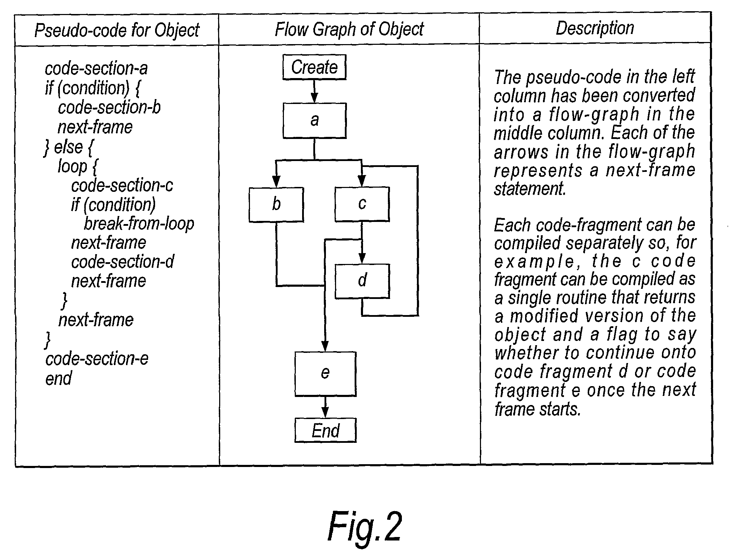

Figure 2 shows a flow diagram of the main procedure for each object. Here, a code fragment is defined as a section of code that: (1) starts with either the object creation or a single next-frame statement, *and* (2) every exit point on flow-graph is a next-frame statement or the object end, *and* (3) there are no next-frame statements within any code-fragment. Each code fragment is a function whose inputs are the state of all referenced objects in frame *n-1* and all messages from frame *n-1* to frame *n*, and whose return value is the state of the object in frame *n* and the messages from the object in frame *n* to frame *n+1.* Each of the code fragments may be separately compiled into an executable form, although other options are possible. The executable form for each code fragment contains a single entry point, returns a modified version of the object and returns a reference to the code fragment to continue onto once the next frame starts. The executable code fragment cannot modify any data visible to other objects until the next frame starts. In order that data, such as the values of local variables, is preserved from one frame to the next, a stack frame can be created on a heap to store the values of local variables.

Execution is split up into *frames.* For each frame, the system runs through all the objects in the system and executes each one. It is entirely possible to execute the objects out of order or in parallel. Each object has a state that includes an amount of data for the object and an *execution point.* When an object is created, the execution point is at the start of the object's main procedure. When execution of the object's main procedure reaches a *next-frame* statement, then execution of that object stops for this frame. At the end of the frame, the new object state is stored. During execution of an object's code, messages may be created. These must be queued up and attached to a target object. Messages can only be read by the target object on the next frame. The messages may also need to be transmitted over a network as described below. Also, an object might read in messages. The messages must be read in a deterministic order. This is to allow out-of-order and parallel execution on multiple systems. The order can be defined by the system and is not described here. At the end of the frame all unused messages can be discarded. All modified objects are modified and the *frame number* is increased by 1. Execution can continue onto the next frame.

Before executing the code of an object it is necessary to know that (for this frame) all potential messages from any object in the system (*i.e.* across the entire network) or the state of other objects that this object refers to must be available. If not, it might be desirable to execute *speculatively*. In this case the object and its frame number must be stored and then the execution can continue without all of the information required. However, the object must be marked as speculative and it will be necessary to revisit this object and re-execute it correctly once all of the required information has arrived.

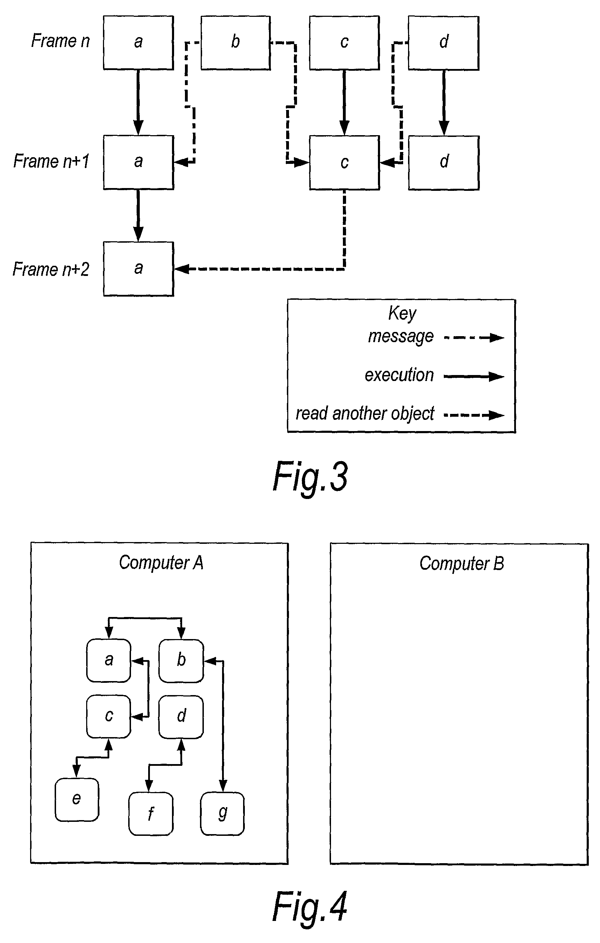

Figure 3 shows execution of a system with four objects labelled a to d. The state in frame n is known and execution of frame n has produced a message from b to a. In frame n+1, object c reads data from objects b and d. In frame n+2, object a reads data from object c. From Figure 3, it can be seen that there are no dependencies between objects in the same frame. Message dependencies only exist from one frame to the next, while read dependencies only exist from the current frame to the previous frame. This is what allows the system to be executed in parallel and over a network. The diagram shows a partial execution in which a is calculated up to frame n+1 and b is ignored. This is to illustrate that it is possible to execute beyond the current consistent network state to calculate a speculative state (which will be based on a mixture of real input data and guessed input data). However, if it is later discovered that b in frame n+1 sends a message to a then, the execution of a in frame n+1 is potentially false and may need to be re-calculated.

The code for each object for each frame can be considered as a function of the value of all the referenced objects in the previous frame and all the messages received by the object. Therefore, if the objects in frame n and the messages from frame n to frame n+1 are consistent throughout the system, then the state of all objects in frame n+1 and the messages from frame n+1 to frame n+2 are just a function of data that is consistent throughout the system. Therefore, the objects will stay consistent as long as the initial state and initial messages are consistent and the functions are executed consistently. In order to achieve determinism, the initial state of objects and the initial messages are consistently transferred throughout the system. Also, the execution of the functions is consistent. So, all operations defined by the language and executed by a local virtual machine must have a consistently defined behaviour. Floating-point operations give a consistent result. All data values are initialized. It is not be possible to reference objects that have been destroyed. Action in response to destroyed objects is consistent. It is possible to try to reference a destroyed object, but this should always result in a failure. The error handling of the language executes in a consistent manner, and it is not be possible for a program on one machine to react differently to the program on another computer in response to the same failure.

An object can be duplicated across a network. This means that for a given frame number, the object on one machine on the network will have exactly the same state as an object on another machine. This is a preferred objectivel of the system, because it allows multiple users on different computers to view and modify the same global state. For example, this allows large numbers of players of a computer game to play in the same game world and interact. Each player is an object that is created on the player's client machine and duplicated onto the other player's machine and (almost certainly) onto a game server. The game world is duplicated across all players' machines. If the world is too large for all players to interact in, then subsets of the game world can be duplicated onto player machines. This method relies on the fact that given the state of an object in frame n, it is possible to calculate the state of the object in frame n+1 consistently across the network.

Figures 4-6 illustrate a technique for duplicating objects across a plurality of computers. Here, 4 of the objects on Computer A, which has a set of 7 objects a to g, are going to be duplicated on Computer B, which has no objects on it. There are messages being sent between objects, which are shown as black arrows between the objects. To duplicate objects, firstly the desired objects, typically a subset of objects, is selected. In this example, objects a, b, c and d. are chosen. Then a specific duplication frame number to start from is chosen. The duplicate frame number is the number of the frame from which the duplication starts. It will be necessary to store a duplication frame number for each set of objects that are duplicated. The objects will exist in-sync from the duplication frame number onwards. This means that in any given frame number (after the duplication frame number) the states of the objects will be the same on both computers.

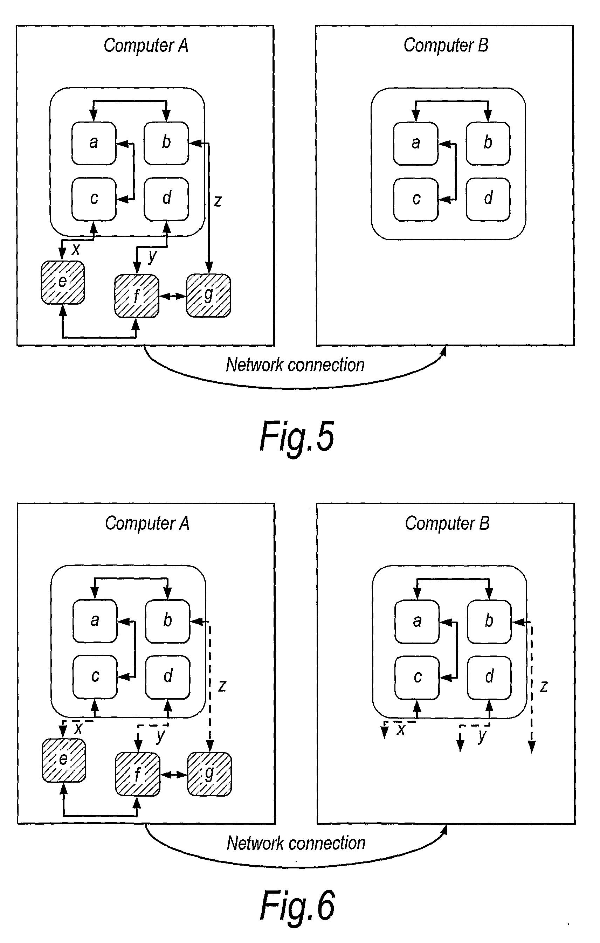

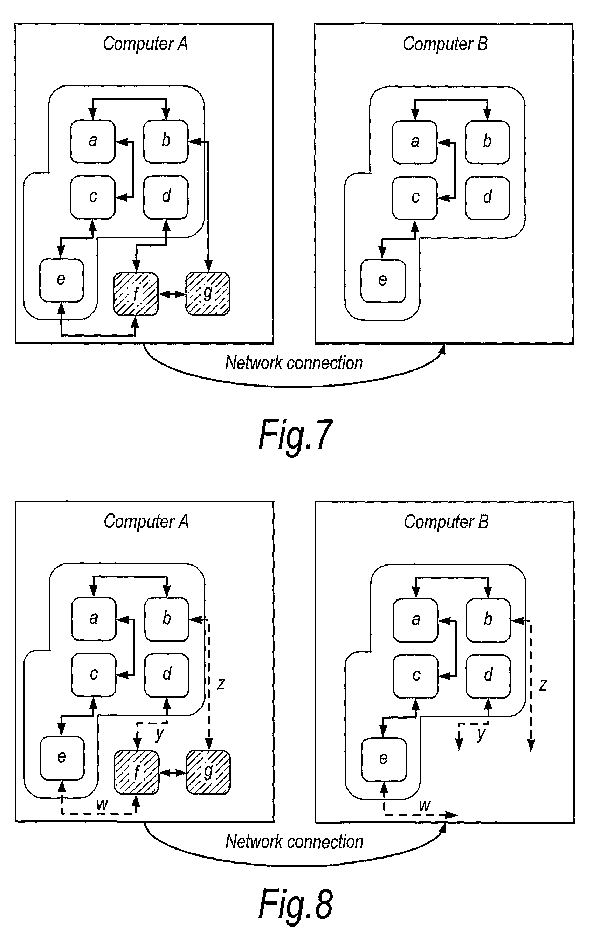

The states of the selected objects are sent at the duplication frame number to Computer B over the network, as shown in Figure 5. Computer A and Computer B can now continue from the duplication frame number and stay synchronized. Computer A and Computer B must remember the set of objects that have been duplicated for as long as they exist duplicated on Computer B. For every subsequent frame, Computer A and Computer B must find every message that crosses the subset boundary. These messages are shown in Figure 7. Messages that are entirely outside or entirely inside the subset boundary do not need to be transmitted across the network. In this example, messages x, y and z must be transmitted across the network. It is only necessary to transmit messages going from outside the subset into the subset. On Computer B, messages leaving the subset to objects not on Computer B can be discarded.

Because it is possible for an object a to read the state of object e without sending or receiving messages, it may sometimes be necessary to transmit the state of entire objects across the network. This is likely to be inefficient. Therefore, an optimal system will choose subsets of objects to duplicate across a network such that there is the minimum quantity of object access and message passing across the subset boundary. This can be achieved dynamically by adding and removing objects from the duplicated set as required.

If the system decides that object e should be added to the duplicate subset, then the subset is expanded to include object e and object e is transmitted across the network, as shown in Figure 8. After object e has been added to the subset, then any messages between e and other members of the subset do not have to be transmitted across the network. However, messages between e and objects that are not members of the subset do now need to be transmitted across the network, as shown in Figure 8. The same system can be used to duplicate objects on Computer B onto Computer A.

When running software across a network there is a delay (or 'latency') between a change occurring on one machine in the network and that being communicated to all the other machines in the network. To maintain instant interactivity with the user, it is sometimes necessary to execute beyond the currently known network state. However, it is important that this instant reaction is corrected from the real network state later and does not create divergence between the different machines in the network. In accordance with the present invention, this is achieved by maintaining two states. One state is the definite network state and the other is a speculative current state. If the definite network state is at frame n, and the user is inputting data at frame n+m, then calculating the speculative current state is achieved by queuing up all the messages into the system from frames n to frame n+m, copying the speculative current state into a temporary store and running temporary stored state for m frames using the queued messages. The queued messages must be kept until the definite network state can be moved forward by one frame. Once the definite network state has consumed the messages, then the messages can be discarded. This system provides a general-purpose speculative execution system to deal with network latency. Existing systems for dealing with network latency usually require prediction software to be written specifically for each type of object in the system. So normally a programmer would have to think about how to implement speculative prediction in a network system, or just have a lot of latency in the user interaction. In contrast, the invention of the present application means the programmer does not have to do anything special to handle network latency.

To implement the speculative prediction method, the following components are preferable a frame counter for the definite network state (because it must be known that all messages for the definite network state frame have been received from all machines in the system before the definite network state can be moved forward by one frame); a queue of messages that have been received since the definite network state - this will consist of messages received from the local system and any messages received from the network; a system for copying the definite network state into a temporary store that will be the speculative current state; the ability to execute the temporary store until there are no more messages available; the ability to execute objects speculatively, so that if the value of an object is not available then it is guessed, and the assumption that if no message is available then none was sent, and the ability to use the speculative current state for display to the user. This requires a memory means to maintain several different frames in memory. The definite network state must always be stored in memory.

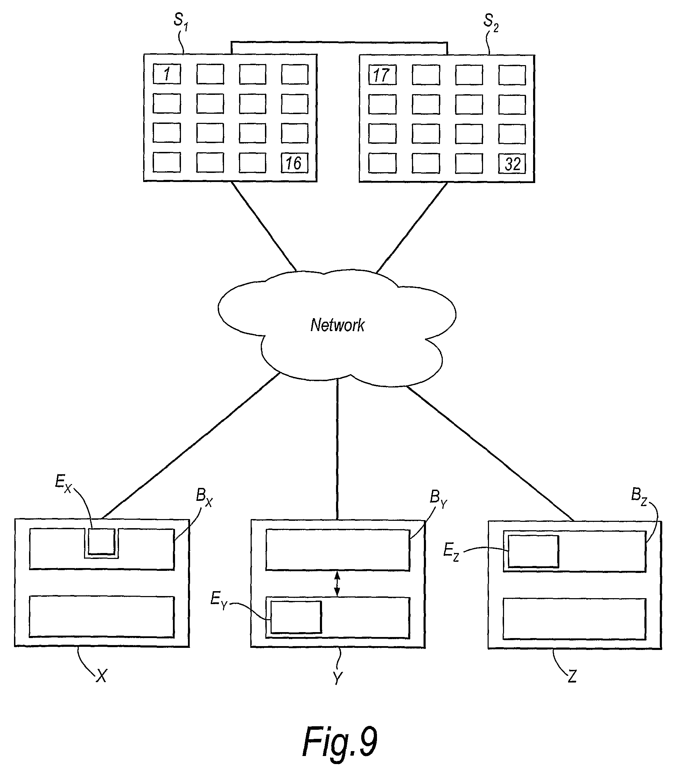

Figure 9 shows a distributed computer system comprising first and second server machines S1 and S2 which are acting as one logical server, and three client machines X, Y and Z. The server is executing objects 1 to 32 in parallel, with the processing being shared between server machine S1 and server machine S2. Each of the execution environments of the system to provide a runtime system that is capable of executing program code or script written in the same language for execution in an execution environment embodying the present invention. This ensures that one or more of the program objects 1 to 32 may be duplicated for execution by the execution environment Ex, Ey or Ez of each of the client machines X, Y and Z respectively in order that a user can participate in the program.

In the case of client machine X, the execution environment Ex is implement within the client's web browser by means of a browser plug in which is downloaded from the server following connection of client machine X thereto. Client machine Y comprises software installed, for example, as part of the machine's operating system which implements the required execution Ey. Furthermore, in the case of client machine Z the execution environment Ez comprises an application written in a browser supported language that is operable to duplicate execution of one or more program objects 1 to 32.

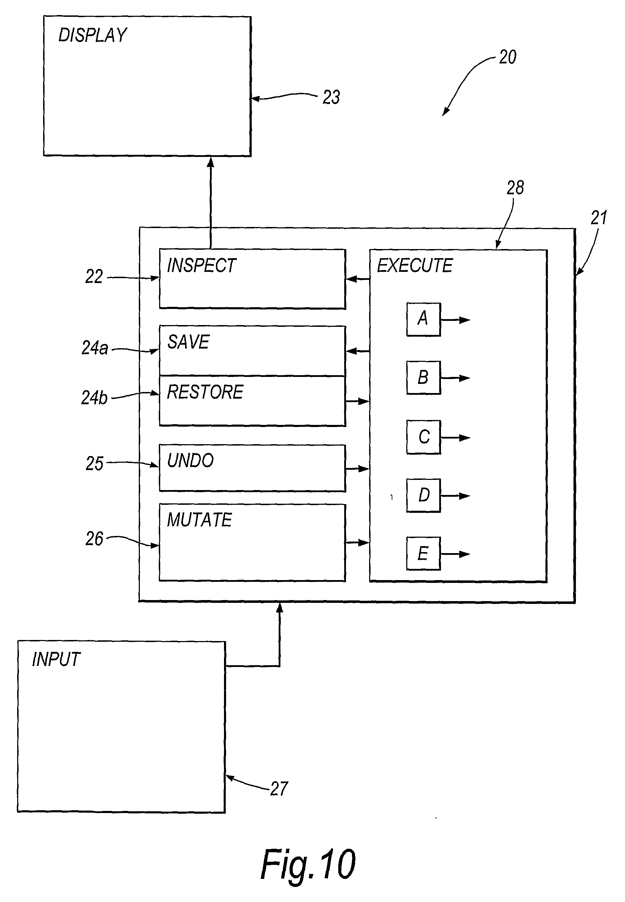

Figure 10 shows parts associated with a computer system generally designated 20 having a debugger 21 according to an embodiment of the present invention. The computer system comprises an execution environment 28 for executing program code of a program to be debugged, inspection means 22 operable in conjunction with a display means 23, to provide a user with a visualisation of the states of executing objects so that the states of those objects can be inspected for errors, a save means 24a for saving the state of a current frame, a restore means 24b for restoring a saved frame for subsequent execution, an undo means 25 operable to discard a frame relative to a frame specified by a user in order to return the execution state to the specified frame state, and a mutation means 26 operable to permit the user to alter a value relating to the state of an object in a frame. Input means, in the form of a keyboard, are provided as an interface between a user and the debugger 21.

The structure and rules of the execution environment 28, which is executing objects A to E in parallel, render it operable to allow deterministic execution of a program portion. Therefore, the execution environment is advantageous in that it allows the execution of a particular program portion, or code path, to be executed backwards using the undo function and replayed.

It should be noted that when a program fails, the actual cause of failure in the program often occurs much earlier in the execution of the program than the point at which failure is noticed or a crash occurs. An advantage of the present embodiment is that due to the deterministic nature of the debugger execution environment the user can step back through the execution of a program using the undo function in order to recreate the program state prior to the failure being noticed or the crash occurring, and can also then replay the execution to carry out a closer inspection of the program's state. This allows the actual cause of the failure in the program to be located more easily and rapidly. Furthermore, possible fixes for the error can be tested using the exact same replay data needed to demonstrate the error in the first place.

A typical procedure during use of the debugger shown in Figure X comprises the following steps:

1. The user invokes the debugger 21 and loads the program to be debugged;

2. The user allows the debugger 21 to execute forward whilst watching the visualisation of the programs state or by participating in the program.

3. The user observes that the program being debugged as reached an error state.

4. The user examines the current state of the program by means of the inspection means 22, to ascertain the cause of the error.

5. The user operates the undo means 25 in order to discard the current frame to return the previous frame.

6. The user replays the execution of that frame again to inspect the error more closely, using a recorded input from the previous run.

7. The user uses the inspection means 22 and display 23 to examines the state of the program to see what was happening just before the error.

8. Once the frame containing the error has been identified, the user discards that frame to return the previous frame.

9. The user operates the mutation means 26 in order to change one or more values of the state of objects comprised in the frame preceding the error in order to test a possible fix for the problem.

10. The user executes the mutated frame and observes whether or not the assertion is triggered. If it is not, the location and cause of the failure have been determined.

Preferred embodiments of the present invention allows some very powerful operations. The *frame* concept makes synchronization and dependencies easy to handle and allows a wholly deterministic system to be provided. This means that the program will behave the same way with the same inputs. It does not matter how many computers are involved, how the elements of the program are distributed amongst different computers, or how long it takes for operations to complete. The program always executes in the same way. The inputs can be stored to make it even easier to repeat. It is also guaranteed that all objects can be executed in parallel at all times. The system can also adapt the distribution of the objects within the computers in the distributed system to minimize communications bottlenecks, either automatically or manually. Memory can be duplicated between two machines so that the memory bottleneck can be reduced.

In addition, the invention forces consistent execution across a network. This allows two copies of an object on the network to stay in sync with respect to a given frame number, simply by ensuring that they receive the same messages. Consequently, the two objects do not have to be constantly copied across the network when they change. This reduces the network bandwidth required and increases the performance. Furthermore, the invention allows *speculative execution,* which is a concept that is required in on-line games. There is a strong risk that it introduces network inconsistency. Other network game systems force the programmer to consider how to achieve it. In contrast, preferred embodiments of the present invention are advantageous in that the system can perform speculative prediction safely and transparently.

Embodiments of the invention could be used for any highly parallel or distributed scalable software, for example on-line computer games with very large numbers of players. It could equally be used to program multi-core processors, or high-performance computing on grids, large systems involving large numbers of users or act as a glue system for existing software that needs to be scaled across a network. Because the invention provides a consistent deterministic order of evaluation, this opens up opportunities to safely split programs into sections, which can be distributed or duplicated.

Using the system in which the invention is embodied allows instant feedback to be provided to the user when used interactively. The system uses speculative prediction to maintain constant user interactivity. The system also maintains a real, consistent state that is consistent throughout the system, regardless of network latency. However, each machine in the system will only be able to calculate the real, consistent state once it has received all the required information from all other computers in the system. The real, consistent state is used to correct mistakes made with the speculative predicted state.

Having illustrated and described the invention in several embodiments and examples, it should be apparent that the invention can be modified, embodied, elaborated or applied in various ways without departing from the principles of the invention. The invention can be implemented in software programs and data structures stored on portable storage media, transmitted by digital communications, or other transmission medium, or stored in a computer memory. Such programs and data structures can be executed on a computer, to perform methods embodying the invention, and to operate as a machine, or part of apparatus, having the capabilities described herein.

**Claims**

1. A distributed computer system comprising a server apparatus having a server execution means and at least one client apparatus having a client execution means,
   wherein the server execution means and each client execution means comprise an execution environment operable such that the execution of a plurality of components of a computer program is carried out in a plurality of frames of execution, wherein a frame of execution comprises a unit of time or work comprising at least one component of the computer program, the plurality of frames of execution being executed sequentially such that all of the plurality of components of a current frame are executed before execution of the next frame begins and any changes of state of a component are visible to the component during its execution but not visible to other components until the next frame begins,
   wherein the client execution means is operable to execute the components of a computer program to be executed by the server execution environment within a browser of the client apparatus, such that the execution of the program components is duplicated by both the server execution environment and the client execution environment,
   wherein the server execution environment and the client execution environment are further operable to create messages during execution of a component, sending each message to a target component within the same execution environment, preventing the target components reading the messages in the current frame and enabling the target components to read the messages in the next frame of execution in a predetermined order, wherein the order is determined using a deterministic ordering method.

2. A distributed computer system as claimed in claim 1, wherein the execution environment is operable to execute one or more components speculatively.

3. A distributed computer system as claimed in one of claims 1-2, wherein at least one component is an object.

4. A distributed computer system as claimed in any preceding claim, wherein the execution environment of at least one client apparatus is implemented within a web-browser of said client apparatus.

5. A distributed computer system as claimed in claim 4, wherein the execution environment of the at least one client apparatus is implemented by means of a browser plug-in which is operable to be installed within the web-browser of said client apparatus.

6. A distributed computer system as claimed in claim 4 or 5, wherein the execution environment of the at least one client apparatus is implemented by means of a runtime program that is written in a language that is supported by the web-browser of said client apparatus.

7. A distributed computer system as claimed in one of claims 1-6, wherein the execution environment is distributed over a plurality of parallel processors.

8. A distributed computer system as claimed in one of claims 1-7, wherein the execution environment is operable to use speculative execution to hide latency when users are interacting with the system.

9. A distributed computer system as claimed in one of claims 1-8, wherein the execution environment is operable to duplicate the execution of one or more components for execution on multiple computers, or by multiple processors, or at different times.

**Patentansprüche**

1. Verteiltes Computersystem, umfassend eine Servervorrichtung mit einem Serverausführungsmittel und zumindest einer Clientvorrichtung mit einem Clientausführungsmittel,
   wobei das Serverausführungsmittel und jedes Clientausführungsmittel eine Ausführungsumgebung umfassen, welche betriebsbereit ist, sodass die Ausführung mehrerer Komponenten eines Computerprogramms in mehreren Ausführungs-Frames durchgeführt wird, wobei ein Ausführungs-Frame eine Einheit von Zeit oder Arbeit umfasst, die zumindest eine Komponente des Computerprogramms umfasst, wobei die mehreren Ausführungs-Frames aufeinanderfolgend ausgeführt werden, sodass alle der mehreren Komponenten eines aktuellen Frames ausgeführt sind, bevor eine Ausführung des nächsten Frames beginnt und irgendwelche Zustandsänderungen einer Komponente für die Komponente während ihrer Ausführung sichtbar sind, nicht aber für andere Komponenten sichtbar sind, bis der nächste Frame beginnt,

wobei das Clientausführungsmittel betriebsbereit ist, die Komponenten eines Computerprogramms auszuführen, welches durch die Serverausführungsumgebung innerhalb eines Browsers der Clientvorrichtung auszuführen sind, sodass die Ausführung der Programmkomponenten durch beide, die Serverausführrungsumgebung und die Clientausführrungsumgebung, dupliziert ist,

wobei die Serverausführrungsumgebung und die Clientausführrungsumgebung des Weiteren betriebsbereit sind, Nachrichten während einer Ausführung einer Komponente zu erstellen, wobei sie jede Nachricht an eine Zielkomponente innerhalb derselben Ausführungsumgebung senden, verhindern, dass die Zielkomponenten die Nachrichten im aktuellen Ausführungs-Frame lesen, und ermöglichen, dass die Zielkomponenten die Nachrichten im nächsten Ausführungs-Frame in einer vorbestimmten Reihenfolge lesen, wobei die Reihenfolge unter Verwendung eines deterministischen Anordnungsverfahrens ermittelt wird.

2. Verteiltes Computersystem nach Anspruch 1, wobei die Ausführungsumgebung betriebsbereit ist, eine oder mehr Komponenten spekulativ auszuführen.

3. Verteiltes Computersystem nach einem der Ansprüche 1-2, wobei zumindest eine Komponente ein Objekt ist.

4. Verteiltes Computersystem nach einem vorangehenden Anspruch, wobei die Ausführungsumgebung von zumindest einer Clientvorrichtung innerhalb eines Webbrowsers der Clientvorrichtung implementiert ist.

5. Verteiltes Computersystem nach Anspruch 4, wobei die Ausführungsumgebung der zumindest einen Clientvorrichtung mittels eines Browser Plug-In implementiert ist, welches betriebsbereit ist, innerhalb des Webbrowsers der Clientvorrichtung installiert zu sein.

6. Verteiltes Computersystem nach Anspruch 4 oder 5, wobei die Ausführungsumgebung der zumindest einen Clientvorrichtung mittels eines Laufzeitprogramms implementiert ist, welches in einer Sprache geschrieben ist, die vom Webbrowser der Clientvorrichtung unterstützt ist.

7. Verteiltes Computersystem nach einem der Ansprüche 1-6, wobei die Ausführungsumgebung über mehrere parallele Prozessoren verteilt ist.

8. Verteiltes Computersystem nach einem der Ansprüche 1-7, wobei die Ausführungsumgebung betriebsbereit ist, eine spekulative Ausführung zu verwenden, um eine Latenz zu verbergen, wenn Anwender mit dem System interagieren.

9. Verteiltes Computersystem nach einem der Ansprüche 1-8, wobei die Ausführungsumgebung betriebsbereit ist, die Ausführung einer oder mehrerer Komponente(n) zur Ausführung auf mehreren Computern oder durch mehrere Prozessoren oder zu verschiedenen Zeiten zu duplizieren.

**Revendications**

1. Système informatique réparti comprenant un appareil de serveur ayant des moyens d'exécution de serveur et au moins un appareil de client ayant des moyens d'exécution de client,

dans lequel les moyens d'exécution de serveur et chaque moyen d'exécution de client comprennent un environnement d'exécution opérationnel de telle sorte que l'exécution de plusieurs des composants d'un programme informatique est effectuée dans plusieurs cadres d'exécution, un cadre d'exécution comprenant une unité de temps ou de travail comprenant au moins un composant du programme informatique, les plusieurs cadres d'exécution étant exécutés séquentiellement de telle sorte que tous les plusieurs composants d'un cadre courant sont exécutés avant que l'exécution du cadre suivant ne commence et que les changements quelconques d'état d'un composant sont visibles pour le composant pendant son exécution mais ne sont pas visibles pour d'autres composants jusqu'à ce que le cadre suivant commence,

dans lequel les moyens d'exécution de client sont opérationnels pour exécuter les composants d'un programme informatique à exécuter par l'environnement d'exécution de serveur dans un navigateur de l'appareil de client, de sorte que l'exécution des composants de programme est dupliquée à la fois par l'environnement d'exécution de serveur et l'environnement d'exécution de client,

dans lequel l'environnement d'exécution de serveur et l'environnement d'exécution de client sont en outre opérationnels pour créer des messages pendant une exécution d'un composant, envoyer chaque message à un composant cible dans le même environnement d'exécution, empêcher les composants cibles de lire les messages dans le cadre courant et permettre aux composants cibles de lire les messages dans le cadre d'exécution suivant dans un ordre prédéterminé, dans lequel l'ordre est déterminé en utilisant un procédé d'ordonnancement déterministe.

2. Système informatique réparti selon la revendication 1, dans lequel l'environnement d'exécution peut être actionné pour exécuter un ou plusieurs composants de manière spéculative.

3. Système informatique réparti selon l'une des revendications 1 ou 2, dans lequel au moins un composant est un objet.

4. Système informatique réparti selon l'une quelconque des revendications précédentes, dans lequel l'environnement d'exécution d'au moins un appareil de client est mis en oeuvre dans un navigateur web de l'appareil de client.

5. Système informatique réparti selon la revendication 4, dans lequel l'environnement d'exécution du au moins un appareil de client est mis en oeuvre par l'intermédiaire d'un branchement de navigateur qui peut être actionné pour être installé dans le navigateur web de l'appareil de client.

6. Système informatique réparti selon les revendications 4 ou 5, dans lequel l'environnement d'exécution du au moins un appareil de client est mis en oeuvre par l'intermédiaire d'un programme qui est écrit dans un langage qui est supporté par le navigateur web de l'appareil de client.

7. Système informatique réparti selon l'une quelconque des revendications 1 à 6, dans lequel l'environnement d'exécution est réparti sur plusieurs processeurs parallèles.

8. Système informatique réparti selon l'une quelconque des revendications 1 à 7, dans lequel l'environnement d'exécution est opérationnel pour utiliser une exécution spéculative pour cacher une latence lorsque des utilisateurs interagissent avec le système.

9. Système informatique réparti selon l'une quelconque des revendications 1 à 8, dans lequel l'environnement d'exécution peut être actionné pour dupliquer l'exécution d'un ou de plusieurs composants pour une exécution sur de multiples ordinateurs, ou par de multiples processeurs, ou à des moments différents.

*Fig.1*

| Pseudo-code for Object | Flow Graph of Object | Description |
|---|---|---|
| code-section-a<br>if (condition) {<br>  code-section-b<br>  next-frame<br>} else {<br>  loop {<br>    code-section-c<br>    if (condition)<br>      break-from-loop<br>    next-frame<br>    code-section-d<br>    next-frame<br>  }<br>  next-frame<br>}<br>code-section-e<br>end | | The pseudo-code in the left column has been converted into a flow-graph in the middle column. Each of the arrows in the flow-graph represents a next-frame statement.<br><br>Each code-fragment can be compiled separately so, for example, the c code fragment can be compiled as a single routine that returns a modified version of the object and a flag to say whether to continue onto code fragment d or code fragment e once the next frame starts. |

*Fig.2*

EP 2 041 658 B1

Fig.3

Fig.4

**Fig.5**

**Fig.6**

Fig.7

Fig.8

*Fig.9*

DISPLAY

— 23

— 20

28

21

INSPECT ←— 22

EXECUTE

A →

SAVE ←— 24a

B →

RESTORE ←— 24b

C →

UNDO ←— 25

D →

MUTATE ←— 26

E →

INPUT

— 27

*Fig.10*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Systematic macrostep debugging of message passing parallel programs. **KACSUK P.** FUTURE GENERATIONS COMPUTER SYSTEMS. ELSEVIER SCIENCE PUBLISHERS, April 2000, vol. 16, 609-624
- **SKILLICORN D B et al.** Models and languages for parallel computation. *ACM COMPUTING SURVEYS ACM USA,* June 1998, vol. 30 (2), 123-169
- Automatic scalability analysis of parallel programs based on modeling techniques. **MALONY AD et al.** COMPUTER PERFORMANCE EVALUATION. MODELLING TECHNIQUES AND TOOLS. INTERNATIONAL CONFERENCE PROCEEDINGS SPRINGER-VERLAG BERLIN, 1994, 139-158
- **DE KERGOMMEAUX J C et al.** Execution replay of parallel procedural programs'' JOURNAL OF SYSTEMS ARCHITECTURE. ELSEVIER SCIENCE PUBUSHERS BV, July 2000, vol. 46, 835-849
- **SANCHEZ-CRESPO DALMAU D.** Core Techniques and Algorithms in Game Programming. NEW RIDERS PUBLISHING, 2004